# FASCICULE DE BREVET EUROPEEN

(11) **EP 3 691 099 B1**
(45) Date de publication et mention de la délivrance du brevet: **03.03.2021**
(21) Numéro de dépôt: 20154056.4
(22) Date de dépôt: 28.01.2020
(51) Int. Cl.: H02M 1/36, H02M 1/10, H02M 1/42, H02M 3/337, H02M 3/335, H02M 1/00

(54) **CONVERTISSEUR DE PUISSANCE COMPORTANT AU MOINS UN TRANSISTOR NORMALEMENT FERMÉ**
LEISTUNGSWANDLER, DER MINDESTENS EINEN NORMALERWEISE GESCHLOSSENEN TRANSISTOR UMFASST
POWER CONVERTER COMPRISING AT LEAST ONE NORMALLY CLOSED TRANSISTOR

(30) Priorité: 01.02.2019 FR 1900987
(43) Date de publication de la demande: 05.08.2020
(73) Titulaire: Commissariat à l'Energie Atomique et aux Energies Alternatives, 75015 Paris (FR)
(72) Inventeur: PERICHON, Pierre, 38054 GRENOBLE CEDEX 9 (FR); CARCOUET, Sébastien, 38054 GRENOBLE CEDEX 9 (FR)
(74) Mandataire: Cabinet Beaumont

(56) Documents cités:
- US-A1- 2013 016 540
- US-A1- 2015 372 585

## Description

### Domaine technique

La présente description concerne le domaine des convertisseurs de puissance de façon générale, et vise plus particulièrement un convertisseur de puissance comportant au moins un transistor normalement fermé.

### Technique antérieure

On connaît de nombreuses architectures de convertisseurs de puissance (convertisseur de tension et/ou de courant) comportant un ou plusieurs transistors à effet de champ commandés en commutation (en tout ou rien) pour assurer la régulation d'un signal de sortie. De tels convertisseurs sont également appelés convertisseurs à découpage.

De façon classique, les transistors utilisés dans de tels convertisseurs sont réalisés à base de silicium. Il s'agit généralement de transistors normalement ouverts, c'est-à-dire non conducteurs en l'absence de signal de commande sur leur grille.

De nouvelles générations de transistors de puissance sont toutefois désormais disponibles, basées sur des matériaux semiconducteurs présentant une bande interdite supérieure à celle du silicium, notamment du carbure de silicium (SiC) et, plus récemment, du nitrure de gallium (GaN).

Les performances élevées de ces nouveaux composants (faible résistance à l'état passant, vitesse de commutation élevée, forte tenue en température) permettent d'améliorer significativement les performances des convertisseurs.

En pratique, dans ces technologies, les transistors les plus performants et les plus simples à réaliser sont des transistors normalement fermés, c'est-à-dire conducteurs en l'absence de signal de commande sur leur grille.

Dans la plupart des architectures de convertisseurs à découpage connues, l'utilisation de transistors normalement fermés en remplacement des traditionnels transistors normalement ouverts pose des difficultés, notamment lors des phases de démarrage et d'arrêt du convertisseur.

Les documents US2013/016540 et US2015/372585 décrivent des exemples de convertisseurs à découpage.

### Résumé de l'invention

Ainsi, un mode de réalisation prévoit un convertisseur de puissance comportant :
- des première et deuxième bornes d'application d'un signal d'entrée ;
- un condensateur de stockage d'énergie ayant des première et deuxième électrodes reliées respectivement aux première et deuxième bornes d'application du signal d'entrée par l'intermédiaire d'un élément limiteur de courant ;
- au moins un transistor normalement fermé ;
- un circuit d'alimentation adapté à générer un signal d'alimentation d'un circuit de commande dudit au moins un transistor normalement fermé ; et
- un commutateur configurable pour, dans une première configuration, relier des première et deuxième bornes d'entrée du circuit d'alimentation respectivement aux première et deuxième bornes d'application du signal d'entrée, en amont de l'élément limiteur de courant, et, dans une deuxième configuration, connecter les première et deuxième bornes d'entrée du circuit d'alimentation respectivement aux première et deuxième électrodes du condensateur de stockage, en aval de l'élément limiteur de courant, le convertisseur étant configuré pour, lors d'une phase de démarrage du convertisseur :
   - commander le commutateur dans la première configuration ;
   - lorsque la tension fournie par le circuit d'alimentation est suffisante, bloquer ledit au moins un transistor normalement fermé ; puis
   - lorsque la tension aux bornes du condensateur de stockage dépasse un premier seuil prédéterminé, commander le commutateur dans la deuxième configuration.

Selon un mode de réalisation, le convertisseur est configuré pour, lors d'une phase d'arrêt du convertisseur :
- bloquer ledit au moins un transistor normalement fermé et maintenir le commutateur dans la deuxième configuration ; puis
- lorsque la tension aux bornes du condensateur de stockage passe sous un deuxième seuil prédéterminé, commander le commutateur dans la première configuration.

Selon un mode de réalisation, le signal d'entrée appliqué sur les première et deuxième bornes d'entrée du convertisseur est une tension alternative.

Selon un mode de réalisation, l'élément limiteur de courant comprend une inductance d'entrée et/ou une résistance de limitation de courant d'appel.

Selon un mode de réalisation, le commutateur comprend un relai électromécanique à deux voies.

Selon un mode de réalisation, le convertisseur comporte un étage de conversion alternatif/continu comportant un premier pont commandé comportant une première branche comportant des premier et deuxième transistors normalement fermés en série entre les première et deuxième électrodes du condensateur de stockage et, en parallèle de la première branche, une deuxième branche comportant des premier et deuxième interrupteurs en série entre les première et deuxième électrodes du condensateur de stockage, le point milieu entre les premier et deuxième transistors normalement fermés de la première branche et le point milieu entre les premier et deuxième interrupteurs de la deuxième branche étant reliés respectivement aux première et deuxième bornes d'application de la tension d'entrée du convertisseur par l'intermédiaire de l'élément limiteur de courant.

Selon un mode de réalisation, le convertisseur comprend en outre un étage de conversion continu/continu comportant un deuxième pont commandé comportant une première branche comportant des troisième et quatrième transistors normalement fermés en série entre les première et deuxième électrodes du condensateur de stockage et, en parallèle de la première branche, une deuxième branche comportant des cinquième et sixième transistors normalement fermés en série entre les première et deuxième électrodes du condensateur de stockage.

Selon un mode de réalisation, l'étage de conversion continu/continu comprend en outre un transformateur comprenant un enroulement primaire comprenant des première et deuxième extrémités reliées respectivement au point milieu entre les troisième et quatrième transistors normalement fermés de la première branche du deuxième pont et au point milieu entre les cinquième et sixième transistors normalement fermés de la deuxième branche du deuxième pont, par l'intermédiaire d'un circuit résonant.

Selon un mode de réalisation, le transformateur de l'étage de conversion continu/continu comprend en outre un enroulement secondaire comportant des première et deuxième extrémités reliées respectivement à des première et deuxième bornes de sortie du convertisseur par l'intermédiaire d'un pont de redressement à diodes.

Selon un mode de réalisation, le circuit d'alimentation est un circuit auto-oscillant comprenant un transformateur comportant un enroulement primaire relié en série avec un transistor de découpage, au moins un premier enroulement secondaire fournissant le signal d'alimentation du circuit de commande dudit au moins un transistor normalement fermé, et un deuxième enroulement secondaire fournissant un signal de commande du transistor de découpage.

Selon un mode de réalisation, le circuit d'alimentation comprend en outre un pont de redressement à diodes comportant des premier et deuxième noeuds d'entrée reliés respectivement aux première et deuxième bornes d'entrée du circuit d'alimentation, et des premier et deuxième noeuds de sortie reliés respectivement à des première et deuxième extrémités de l'association en série de l'enroulement primaire du transformateur du circuit d'alimentation et du transistor de découpage.

Selon un mode de réalisation, le circuit d'alimentation comprend en outre un condensateur de lissage en parallèle de l'association en série de l'enroulement primaire du transformateur du circuit d'alimentation et du transistor de découpage.

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :

la figure 1 est un schéma électrique d'un exemple d'un convertisseur à découpage selon un mode de réalisation ; et

la figure 2 est un schéma électrique illustrant plus en détail un exemple de réalisation d'un circuit d'alimentation du convertisseur de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation des transistors normalement fermés des convertisseurs décrits n'a pas été détaillée, les modes de réalisations décrits étant compatibles avec toutes ou la plupart des structures connues de transistors normalement fermés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

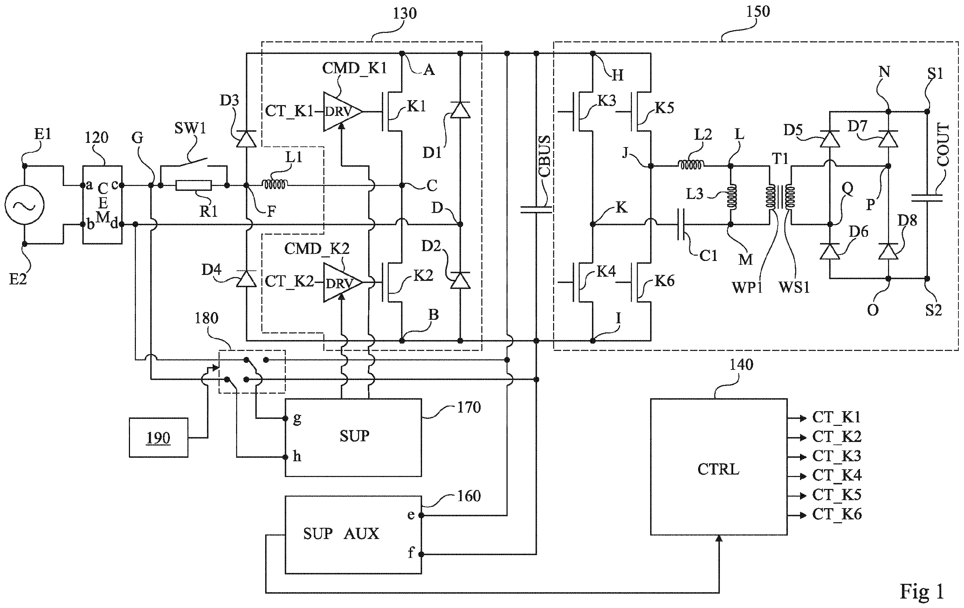

La figure 1 est un schéma électrique d'un exemple d'un convertisseur de puissance selon un mode de réalisation.

Dans cet exemple, on a considéré un convertisseur de tension de type AC/DC (alternatif/continu) comportant un étage 130 de conversion AC/DC, aussi appelé étage de correction de facteur de puissance, et un étage 150 de conversion DC/DC (continu/continu) à isolement galvanique.

L'étage 130 comprend un pont commandé comportant une première branche comportant deux transistors K1 et K2 reliés en série entre des noeuds A et B du convertisseur, et, en parallèle de la première branche, une deuxième branche comportant deux diodes D1 et D2 reliées en série entre les noeuds A et B. Plus particulièrement, dans cet exemple, la diode D1 a sa cathode reliée, de préférence connectée, au noeud A et son anode reliée, de préférence connectée, à la cathode de la diode D2, et la diode D2 a son anode reliée, de préférence connectée, au noeud B. De plus, dans cet exemple, le transistor K1 a un premier noeud de conduction relié, de préférence connecté, au noeud A et un deuxième noeud de conduction relié, de préférence connecté, à un premier noeud de conduction du transistor K2, et le transistor K2 a un deuxième noeud de conduction relié, de préférence connecté, au noeud B. Le point milieu entre les transistors K1 et K2 définit un noeud C du convertisseur, et le point milieu entre les diodes D1 et D2 définit un noeud D du convertisseur.

Les noeuds A et B forment des noeuds de sortie de l'étage 130 et sont reliés, de préférence connectés, respectivement à des première et deuxième électrodes d'un condensateur de stockage d'énergie CBUS.

Les noeuds C et D, formant des noeuds d'entrée de l'étage 130, sont reliés respectivement à des bornes E1 et E2 d'application d'une tension alternative d'entrée du convertisseur, par exemple une tension sinusoïdale, par exemple une tension d'amplitude de l'ordre de 230 volts et de fréquence de l'ordre de 50 Hz, par exemple la tension secteur.

Le convertisseur comprend en outre une inductance d'entrée L1 reliant le noeud C au noeud E1. Plus particulièrement, l'inductance L1 a une première extrémité reliée, de préférence connectée, au noeud C, et une deuxième extrémité reliée, de préférence connectée, à un noeud F, le noeud F étant lui-même relié au noeud E1.

Dans cet exemple, le convertisseur comprend en outre une résistance R1 de limitation de courant d'appel reliée en série avec l'inductance L1 entre le noeud C et le noeud E1. Plus particulièrement, dans cet exemple, la résistance R1 a une première extrémité reliée, de préférence connectée, au noeud F, et une deuxième extrémité reliée, de préférence connecté, à un noeud G, le noeud G étant lui-même relié au noeud E1.

Dans l'exemple représenté, le convertisseur comprend de plus un circuit de filtrage d'éventuelles perturbations électromagnétiques 120 (CEM). Le circuit 120 comprend des bornes a et b reliées, de préférence connectées, respectivement aux bornes d'entrée E1 et E2 du convertisseur, et des bornes c et d reliées respectivement aux noeuds C et D du convertisseur. Dans cet exemple, les bornes c et d du circuit de filtrage 120 sont reliées, de préférence connectées, respectivement au noeud F et au noeud D du convertisseur.

Dans l'exemple de la figure 1, le convertisseur comprend de plus un interrupteur SW1, par exemple une association en série de deux transistors normalement ouverts tête bêche, ou un relai électromécanique, relié en parallèle de la résistance R1 entre les noeuds G et F. Plus particulièrement, dans cet exemple, l'interrupteur SW1 a un premier noeud de conduction relié, de préférence connecté, au noeud G et un deuxième noeud de conduction relié, de préférence connecté, au noeud F. Le convertisseur de la figure 1 comprend de plus une diode D3 connectée en direct entre les noeuds F et A, et une diode D4 connectée en inverse entre les noeuds F et B. Plus particulièrement, la diode D3 a son anode reliée, de préférence connectée, au noeud F et sa cathode reliée, de préférence connectée, au noeud A, et la diode D4 a son anode reliée, de préférence connectée, au noeud B et sa cathode reliée, de préférence connectée, au noeud F. Les diodes D3 et D4, l'interrupteur SW1 et la résistance R1 forment un circuit de précharge du condensateur CBUS.

Dans cet exemple, les transistors K1 et K2 de l'étage 130 sont des transistors à effet champ normalement fermés, par exemple des transistors à base de carbure de silicium ou des transistors à base de nitrure de gallium. L'étage 130 comprend en outre, pour chacun des transistors K1 et K2, un circuit de commande ou driver (DRV) CMD_K1, respectivement CMD_K2, adapté à recevoir un signal logique de commande CT_K1, respectivement CT_K2 en provenance d'un circuit de contrôle 140 (CTRL) du convertisseur, par exemple un microcontrôleur, et à commander en conséquence l'ouverture ou la fermeture du transistor K1, respectivement K2, par application d'une tension appropriée entre la grille et la source du transistor, par exemple une tension négative de l'ordre de -10 à -30 volts pour ouvrir le transistor, et une tension sensiblement nulle pour fermer le transistor.

L'étage de conversion DC/DC 150 comprend un pont commandé comportant une première branche comportant deux transistors K3 et K4 reliés en série entre des noeuds H et I du convertisseur, et, en parallèle de la première branche, une deuxième branche comportant deux transistors K5 et K6 reliés en série entre les noeuds H et I. Plus particulièrement, dans cet exemple, le transistor K3 a un premier noeud de conduction relié, de préférence connecté, au noeud H et un deuxième noeud de conduction relié, de préférence connecté, à un premier noeud de conduction du transistor K4, et le transistor K4 a un deuxième noeud de conduction relié, de préférence connecté, au noeud I. De plus, le transistor K5 a un premier noeud de conduction relié, de préférence connecté, au noeud H et un deuxième noeud de conduction relié, de préférence connecté, à un premier noeud de conduction du transistor K6, et le transistor K6 a un deuxième noeud de conduction relié, de préférence connecté, au noeud I.

Les noeuds H et I forment des noeuds d'entrée de l'étage 150 et sont reliés, de préférence connectés, respectivement aux noeuds de sortie A et B de l'étage 130.

Le point milieu entre les transistors K5 et K6 définit un noeud J du convertisseur, et le point milieu entre les transistors K3 et K4 définit un noeud K du convertisseur. Les noeuds J et K sont reliés à un résonateur de type LLC comportant une association de deux inductances L2 et L3 et d'un condensateur C1. Plus particulièrement, dans cet exemple, l'inductance L2 a une première extrémité reliée, de préférence connectée, au noeud J et une deuxième extrémité reliée, de préférence connectée, à un noeud L, l'inductance L3 a une première extrémité reliée, de préférence connectée, au noeud L et une deuxième extrémité reliée, de préférence connectée, à un noeud M, et le condensateur C1 a une première électrode reliée, de préférence connectée, au noeud M et une deuxième électrode reliée, de préférence connectée, au noeud K.

L'étage 150 comprend de plus un transformateur d'isolement T1 comprenant un enroulement primaire WP1 et un enroulement secondaire WS1 couplés l'un à l'autre par couplage électromagnétique. Dans cet exemple, l'enroulement primaire WP1 du transformateur T1 est connecté en parallèle de l'inductance L3 du résonateur LLC. Plus particulièrement, dans cet exemple, l'enroulement WP1 a une première extrémité reliée, de préférence connectée, au noeud L, et une deuxième extrémité reliée, de préférence connectée, au noeud M. On notera qu'en pratique, l'inductance L3 n'est pas nécessairement un composant spécifique, mais peut être constituée par l'inductance magnétisante du transformateur T1. De façon similaire, l'inductance L2 n'est pas nécessairement un composant spécifique, mais peut être constituée par l'inductance de fuite du transformateur, le noeud L étant alors connecté au noeud J.

L'étage 150 comprend en outre, en sortie du transformateur T1, un pont de redressement à diodes comportant une première branche comportant deux diodes D5 et D6 reliées en série entre des noeuds N et O, et, en parallèle de la première branche, une deuxième branche comportant deux diodes D7 et D8 reliées en série entre les noeuds N et O. Plus particulièrement, dans cet exemple, la diode D5 a sa cathode reliée, de préférence connectée, au noeud N et son anode reliée, de préférence connectée, à la cathode de la diode D6, et la diode D6 a son anode reliée, de préférence connectée, au noeud O. De plus, dans cet exemple, la diode D7 a sa cathode reliée, de préférence connectée, au noeud N et son anode reliée, de préférence connectée, à la cathode de la diode D8, et la diode D8 a son anode reliée, de préférence connectée, au noeud O.

Le point milieu entre les diodes D7 et D8 définit un noeud P du convertisseur, et le point milieu entre les diodes D5 et D6 définit un noeud Q du convertisseur. Les noeuds P et Q forment des noeuds d'entrée du pont de diodes et sont reliés, de préférence connectés, respectivement à une première extrémité et à une deuxième extrémité de l'enroulement secondaire WS1 du transformateur T1. Les noeuds N et O forment des noeuds de sortie du pont de diodes et sont reliés, de préférence connectés, respectivement à des bornes de sortie S1 et S2 du convertisseur.

L'étage de conversion DC/DC 150 comprend en outre un condensateur COUT relié, de préférence connecté, entre les bornes de sortie S1 et S2 du convertisseur.

Les transistors K3, K4, K5 et K6 du circuit de l'étage de conversion DC/DC 150 sont des transistors à effet de champ normalement fermés, par exemple du même type que les transistors K1 et K2. Comme pour les transistors K1 et K2, l'étage 150 peut en outre comprendre, pour chacun des transistors K3, K4, K5 et K6, un circuit de commande ou driver (non détaillé sur la figure) adapté à recevoir un signal logique de commande CT_K3, respectivement CT_K4, respectivement CT_K5, respectivement CT_K6 en provenance du circuit de contrôle CTRL du convertisseur, et à commander en conséquence l'ouverture ou la fermeture du transistor par application d'une tension appropriée entre la grille et la source du transistor, par exemple une tension négative de l'ordre de -10 à -30 volts pour ouvrir le transistor, et une tension sensiblement nulle pour fermer le transistor.

Le convertisseur comprend un circuit d'alimentation auxiliaire 160 (SUP AUX) fournissant une tension d'alimentation continue au circuit de contrôle 140 du convertisseur. Le circuit d'alimentation auxiliaire 160 comprend des bornes d'alimentation d'entrée e et f reliées, de préférence connectées respectivement aux bornes du condensateur CBUS, c'est-à-dire aux noeuds A et B. Le circuit 160 comprend un circuit de conversion DC/DC (non détaillé) convertissant la tension continue fournie par l'étage 130 aux bornes du condensateur CBUS en une tension continue adaptée à alimenter le circuit de contrôle 140, par exemple comprise entre 3 et 15 volts.

Le convertisseur comprend en outre un circuit d'alimentation 170 (SUP) fournissant une tension d'alimentation continue à chacun des circuits de commande des transistors K1, K2, K3, K4, K5 et K6 du convertisseur. Le circuit d'alimentation 170 comprend des bornes d'entrée g et h.

Le convertisseur comprend de plus un commutateur 180 configurable pour, dans une première configuration, relier les bornes d'entrée g et h du circuit 170 respectivement aux bornes d'entrée E1 et E2 du convertisseur, en amont d'au moins un élément limiteur du courant de charge du condensateur CBUS, et, dans une deuxième configuration, connecter les bornes d'entrée g et h du circuit 170 aux bornes du condensateurs CBUS, c'est-à-dire respectivement aux noeuds A et B. Dans l'exemple de la figure 1, le circuit de filtrage 120, la résistance R1 et l'inductance L1 constituent respectivement trois éléments de limitation du courant de charge du condensateur CBUS. Dans cet exemple, dans la deuxième configuration, le commutateur 180 connecte les bornes g et h du circuit 170 respectivement aux noeuds G et D du convertisseur, c'est-à-dire en amont de la résistance R1 et de l'inductance L1, et en aval (par rapport aux bornes d'entrée E1 et E2) du circuit de filtrage 120.

Ainsi, dans la première configuration du commutateur 180, le circuit d'alimentation 170 reçoit sur ses bornes g et h une tension d'alimentation alternative (la tension d'entrée du convertisseur filtrée par le filtre de compatibilité électromagnétique 120), et, dans la deuxième configuration du commutateur 180, le circuit d'alimentation 170 reçoit sur ses bornes g et h une tension d'alimentation continue (la tension aux bornes du condensateur CBUS). Le circuit 170 comprend un circuit de conversion (non détaillé sur la figure 1) convertissant la tension alternative ou continue appliquée sur ses bornes d'entrée g et h en une tension continue adaptée à alimenter les circuits de commande des transistors K1, K2, K3, K4, K5 et K6, par exemple comprise entre -10 et -30 volts.

Le commutateur 180 est par exemple réalisé au moyen d'un relai électromécanique à deux voies. Le convertisseur de la figure 1 comprend de plus un circuit 190 adapté à commander le commutateur 180 dans l'une ou l'autre des première et deuxième configurations.

Le fonctionnement du convertisseur de la figure 1 va maintenant être décrit.

Lorsque le convertisseur est à l'arrêt (aucune tension appliquée entre ses bornes d'entrée E1 et E2), les transistors normalement fermés K1, K2, K3, K4, K5 et K6 sont passants, la capacité CBUS est déchargée (tension nulle à ses bornes), l'interrupteur SW1 est ouvert, et le commutateur 180 est dans la première configuration (bornes g et h du circuit d'alimentation reliées respectivement aux bornes d'entrée E1 et E2 du convertisseur). Le circuit d'alimentation 170 ne recevant pas de tension d'alimentation, les circuits de commande des transistors K1, K2, K3, K4, K5 et K6 ne sont pas alimentés, de sorte que les transistors K1, K2, K3, K4, K5 et K6 ne peuvent pas être bloqués. Le circuit d'alimentation 160 ne reçoit pas non plus de tension d'alimentation, de sorte que le circuit de contrôle 140 n'est pas alimenté.

Dans ces conditions, une tension alternative d'entrée, par exemple la tension secteur, peut être appliquée entre les bornes d'entrée E1 et E2 du convertisseur, à un angle de phase quelconque. Ceci marque le début d'une phase de démarrage du convertisseur.

Le courant croit alors dans la résistance R1, l'inductance L1 et dans les transistors K1, K2, K3, K4, K5 et K6. A ce stade, le condensateur CBUS ne peut pas se charger dans la mesure où ses électrodes sont court-circuitées par les transistors K1, K2, K3, K4, K5 et K6. Il convient donc d'ouvrir les transistors K1, K2, K3, K4, K5 et K6 le plus rapidement possible, avant que le courant qui les traverse devienne trop élevé, pour éviter leur destruction. En particulier, les transistors au nitrure de gallium sont particulièrement sensibles dans la mesure où leur tenue en énergie est environ 100 à 200 fois plus faible que celle de transistors en carbure de silicium, et environ 10 fois plus faible que celle de transistors en silicium. A titre d'exemple, le courant de court-circuit traversant les transistors K1, K2, K3, K4, K5 et/ou K6 ne doit pas dépasser 20 ampères, ce qui requiert dans cet exemple de pouvoir bloquer les transistors K1, K2, K3, K4, K5 et K6 en moins de 10 à 30 µs dans le cas d'une tension alternative d'entrée sinusoïdale d'amplitude de l'ordre de 230 volts et de fréquence de l'ordre de 50 Hz et pour une inductance L1 de valeur de l'ordre de 300 à 400 µH.

L'alimentation des circuits de commande des transistors K1, K2, K3, K4, K5 et K6 est fournie par le circuit 170, alimenté à ce stade par la tension alternative d'entrée du convertisseur. Dès que le niveau de la tension d'alimentation de sortie fournie aux circuits de commande des transistor K1, K2, K3, K4, K5 et K6 est suffisant pour assurer le blocage des transistors, ces derniers sont automatiquement ouverts. En effet, le circuit de contrôle 140 n'étant pas encore alimenté, les signaux de commande CT_K1, CT_K2, CT_K3, CT_K4, CT_K5 et CT_K6 appliqués aux circuits de commande des transistors K1, K2, K3, K4, K5 et K6 sont des signaux de niveau bas, correspondant à des signaux de commande en ouverture des transistors.

Une fois les transistors K1, K2, K3, K4, K5 et K6 bloqués, le condensateur CBUS se charge via la résistance R1 et les diodes D3, D4, D1 et D2.

Lorsque la tension aux bornes du condensateur CBUS atteint un premier seuil de démarrage prédéterminé TH1_START, correspondant au niveau minimal de fonctionnement du circuit d'alimentation auxiliaire 170, par exemple de l'ordre de 10 volts, le circuit 190 commande le commutateur 180 dans la deuxième configuration, pour connecter les bornes d'alimentation g et h du circuit d'alimentation 170 aux bornes du condensateur CBUS.

Lorsque la tension aux bornes du condensateur CBUS atteint un niveau suffisant, par exemple supérieur au seuil TH1_START, le circuit de contrôle 140 alimenté par le circuit d'alimentation auxiliaire 160 démarre.

Lorsque la tension aux bornes du condensateur CBUS atteint un second seuil de démarrage prédéterminé TH2_START supérieur au premier seuil, l'interrupteur SW1 est fermé pour court-circuiter la résistance de précharge R1. Ceci marque la fin de la phase de démarrage du convertisseur. Le seuil TH2_START peut être fixé en fonction de la tenue en courant des diodes D1, D2, D3 et D4. Plus particulièrement, le seuil TH2_START est choisi suffisamment proche de la valeur crête de la tension alternative d'entrée du convertisseur (de l'ordre de 325 volts pour une tension alternative d'entrée de 230 volts efficaces), pour que le courant appelé lors de la fermeture de l'interrupteur SW1 soit inférieur au courant maximal que peuvent supporter sans dégradation les diodes D1, D2, D3 et D4. A titre d'exemple, le seuil TH2_START est compris entre 70 et 95 pourcents de la valeur crête de la tension alternative d'entrée du convertisseur.

En régime établi, le circuit de contrôle 140 commande les transistors K1 et K2 en alternance à l'état ouvert et à l'état fermé pour assurer une absorption sensiblement sinusoïdale du courant par le convertisseur. La tension aux bornes du condensateur CBUS est maintenue à une valeur sensiblement constante appelée tension nominale de pleine charge du condensateur CBUS, typiquement de l'ordre de 400 volts pour une tension alternative d'entrée sinusoïdale d'amplitude de l'ordre de 230 volts et de fréquence de l'ordre de 50 Hz. Le pont en H formé par les transistors K3, K4, K5 et K6 est commandé en alternance dans une première configuration dans laquelle les transistors K3 et K6 sont fermés et les transistors K4 et K5 sont ouverts, et dans une deuxième configuration dans laquelle les transistors K3 et K6 sont ouverts et les transistors K4 et K5 sont fermés, de façon à assurer la transformation de la tension continue fournie aux bornes du condensateur CBUS en une tension continue de niveau différent fournie aux bornes du condensateur COUT.

Lors d'une phase d'arrêt du convertisseur, la tension alternative d'entrée du convertisseur est coupée, à un angle de phase quelconque.

Tant que la tension aux bornes du condensateur CBUS est supérieure à un premier seuil d'arrêt prédéterminé TH1_STOP, par exemple compris entre 70 et 95 pourcents de la tension nominale de pleine charge du condensateur CBUS, par exemple de l'ordre de 350 volts pour une tension d'entrée sinusoïdale d'amplitude de l'ordre de 230 volts et de fréquence de l'ordre de 50 Hz, le fonctionnement du convertisseur est maintenu identique au fonctionnement de régime établi. Ceci permet de ne pas interrompre le fonctionnement du convertisseur en cas de chute transitoire de la tension d'entrée, par exemple en cas de microcoupures de la tension d'entrée pendant une durée de l'ordre de quelques millisecondes à quelques dizaines de millisecondes.

Lorsque la tension aux bornes du condensateur CBUS passe sous le premier seuil d'arrêt TH1_STOP, l'interrupteur SW1 est ouvert, de façon à permettre un redémarrage sûr du convertisseur en cas de retour impromptu de la tension d'entrée. De plus, les transistors K1, K2, K3, K4, K5 et K6 sont ouverts.

Tant que la tension aux bornes du condensateur CBUS est supérieure à un deuxième seuil d'arrêt prédéterminé TH2_STOP inférieur au premier seuil TH1_STOP, dépendant de la tenue en énergie des transistors K1, K2, K3, K4, K5 et K6 en régime de court-circuit (par exemple de l'ordre de 12 volts pour un condensateur CBUS de capacité de l'ordre de 1 mF, pour des transistors K1, K2, K3, K4, K5 et K6 au nitrure de gallium présentant une tenue en énergie en régime de court-circuit de l'ordre de 0,1 J/cm², et pour une surface de transistors de l'ordre de 0,5 cm²), les circuits de commande des transistors K1, K2, K3, K4, K5 et K6 continuent d'être alimentés par le circuit d'alimentation 170, le circuit de contrôle 140 continue d'être alimenté par le circuit d'alimentation auxiliaire 160, et les transistors K1, K2, K3, K4, K5 et K6 sont maintenus ouverts. La quantité d'énergie stockée dans le condensateur CBUS pouvant être très importante, il faut en effet attendre que le condensateur CBUS soit suffisamment déchargé pour pouvoir relâcher la commande des transistors K1, K2, K3, K4, K5 et K6 et ainsi court-circuiter le condensateur CBUS. Pour accélérer la décharge du condensateur CBUS pendant la phase d'arrêt, un circuit de décharge spécifique, non représenté, peut éventuellement être prévu.

Lorsque la tension aux bornes du condensateur CBUS passe sous le deuxième seuil d'arrêt TH2_STOP, les circuits d'alimentation 160 et 170 cessent de fonctionner, provoquant la fermeture des transistors K1, K2, K3, K4, K5 et K6 et la décharge complète du condensateur CBUS à travers ces transistors. Le circuit 190 commande alors le commutateur 180 dans la première configuration, pour relier les bornes d'alimentation g et h du circuit d'alimentation 170 respectivement aux bornes d'entrée E1 et E2 du convertisseur.

Le convertisseur est ainsi à nouveau en condition de démarrage.

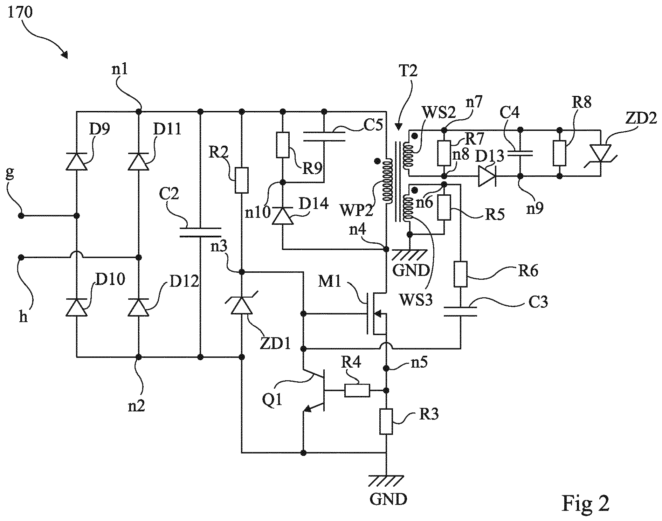

La figure 2 est un schéma électrique illustrant plus en détail un exemple de réalisation du circuit d'alimentation 170 du convertisseur de la figure 1.

Comme exposé ci-dessus, dans cet exemple, le circuit 170 doit pouvoir générer la tension d'alimentation des circuits de commande des transistors normalement fermés du convertisseur (par exemple de l'ordre de -10 à -30 volts) à partir d'une tension d'alimentation d'entrée qui peut être alternative (au démarrage) ou continue (en régime établi ou lors de l'arrêt du convertisseur). Dans le cas d'une tension d'alimentation d'entrée continue, le niveau de cette dernière peut varier dans une large plage, par exemple entre 12 volts et 400 volts. De plus, au démarrage du convertisseur, le circuit 170 doit pouvoir fournir la tension d'alimentation des circuits de commande des transistors normalement fermés très rapidement (par exemple en moins de 10 à 30 µs), et ce quel que soit l'angle de phase de la tension d'entrée du convertisseur au moment du démarrage.

Le circuit 170 de la figure 2 comprend un pont de redressement à diodes comportant une première branche comportant deux diodes D9 et D10 reliées en série entre des noeuds n1 et n2, et, en parallèle de la première branche, une deuxième branche comportant deux diodes D11 et D12 reliées en série entre les noeuds n1 et n2. Plus particulièrement, dans cet exemple, la diode D9 a sa cathode reliée, de préférence connectée, au noeud n1 et son anode reliée, de préférence connectée, à la cathode de la diode D10, et la diode D10 a son anode reliée, de préférence connectée, au noeud n2. De plus, dans cet exemple, la diode D11 a sa cathode reliée, de préférence connectée, au noeud n1 et son anode reliée, de préférence connectée, à la cathode de la diode D12, et la diode D12 a son anode reliée, de préférence connectée, au noeud n2. Le point milieu entre les diodes D9 et D10 est relié, de préférence connecté, à la borne d'entrée d'alimentation g du circuit 170, et le point milieu entre les diodes D11 et D12 est relié, de préférence connecté, à la borne d'entrée d'alimentation h du circuit 170.

Le circuit 170 de la figure 2 comprend en outre un condensateur de lissage C2 ayant une première électrode reliée, de préférence connectée, au noeud n1 et une deuxième électrode reliée, de préférence connectée, au noeud n2.

Le circuit 170 comprend de plus, en parallèle du condensateur C2, une branche comportant une association en série d'une résistance R2 et d'une diode Zener ZD1. Plus particulièrement, dans cet exemple, la résistance R2 a une première extrémité reliée, de préférence connectée, au noeud n1 et une deuxième extrémité reliée, de préférence connectée, à un noeud n3, et la diode Zener ZD1 a sa cathode reliée, de préférence connectée, au noeud n3 et son anode reliée, de préférence connectée, au noeud n2.

Le circuit 170 de la figure 2 comprend en outre un transformateur d'isolement T2. Dans l'exemple représenté, le transformateur T2 comprend un enroulement primaire WP2, et deux enroulements secondaires WS2 et WS3, couplés à l'enroulement primaire WP2 par couplage électromagnétique. Dans cet exemple, le sens d'enroulement des enroulements primaire WP2 et secondaires WS2 et WS3 est identique.

L'enroulement primaire WP2 a une première extrémité reliée, de préférence connectée, au noeud n2, et une deuxième extrémité reliée, de préférence connectée, à un noeud n4.

Le circuit 170 comprend en outre un transistor M1 reliant, par ses noeuds de conduction, le noeud n4 à un noeud GND d'application d'un potentiel de référence du circuit, par exemple la masse. Plus particulièrement, dans cet exemple, le transistor M1a un premier noeud de conduction relié, de préférence connecté, au noeud n4 et un deuxième noeud de conduction relié, de préférence connecté, à un noeud n5, le noeud n5 étant relié au noeud GND par l'intermédiaire d'une résistance R3. Dans l'exemple représenté, la résistance R3 a une première extrémité reliée, de préférence connectée, au noeud n5 et une deuxième extrémité reliée, de préférence connectée, au noeud GND. Le transistor M1 a en outre un noeud de commande relié, de préférence connecté, au noeud n3. A titre d'exemple, le transistor M1 est un transistor MOS à canal N dont le drain et la source sont reliés respectivement aux noeuds n4 et n5 et dont la grille est reliée au noeud n3.

Le circuit 170 de la figure 2 comprend en outre un transistor Q1 reliant, par ses noeuds de conduction, le noeud n3 au noeud GND. Plus particulièrement, dans cet exemple, le transistor Q1 a un premier noeud de conduction relié, de préférence connecté, au noeud n3 et un deuxième noeud de conduction relié, de préférence connecté, au noeud GND. Le transistor Q1 a en outre un noeud de commande relié au noeud n5 par l'intermédiaire d'une résistance R4. Dans l'exemple représenté, la résistance R4 a une première extrémité reliée, de préférence connectée, à la base du transistor Q1 et une deuxième extrémité reliée, de préférence connectée, au noeud n5. A titre d'exemple, le transistor Q1 est un transistor bipolaire de type NPN dont le collecteur et l'émetteur sont reliés respectivement aux noeuds n3 et GND et dont la base est reliée au noeud n5 par l'intermédiaire de la résistance R4.

L'enroulement secondaire WS3 du transformateur T2 a une première extrémité reliée, de préférence connectée, à un noeud n6 et une deuxième extrémité reliée, de préférence connectée, au noeud GND. Le circuit 170 de la figure 2 comprend de plus une résistance R5 connectée en parallèle de l'enroulement secondaire WS3. Plus particulièrement, dans cet exemple, la résistance R5 a une première extrémité reliée, de préférence connectée, au noeud n6 et une deuxième extrémité reliée, de préférence connectée, au noeud GND. Le circuit 170 de la figure 2 comprend en outre une association en série d'une résistance R6 et d'un condensateur C3 entre les noeuds n6 et n3. Plus particulièrement, dans cet exemple, la résistance R6 a une première extrémité reliée, de préférence connectée, au noeud n6 et une deuxième extrémité reliée, de préférence connectée, à une première électrode du condensateur C3, et la deuxième électrode du condensateur C3 est reliée, de préférence connectée, au noeud n3.

L'enroulement secondaire WS2 du transformateur T2 a une première extrémité reliée, de préférence connectée, à un noeud n7 et une deuxième extrémité reliée, de préférence connectée, à un noeud n8. Le circuit 170 comprend en outre une résistance R7 connectée en parallèle de l'enroulement secondaire WS2. Plus particulièrement, dans cet exemple, la résistance R7 a une première extrémité reliée, de préférence connectée, au noeud n7 et une deuxième extrémité reliée, de préférence connectée, au noeud n8. Le circuit 170 de la figure 2 comprend en outre une diode D13 connectée en direct entre le noeud n8 et un noeud n9. Plus particulièrement, dans cet exemple, la diode D13 a son anode reliée, de préférence connectée, au noeud n8 et sa cathode reliée, de préférence connectée, au noeud n9. Le circuit 170 comprend en outre un condensateur C4 ayant une première électrode reliée, de préférence connectée, au noeud n7 et une deuxième électrode reliée, de préférence connectée, au noeud n9. Le circuit 170 comprend de plus une résistance R8 ayant une première extrémité reliée, de préférence connectée, au noeud n7 et une deuxième extrémité reliée, de préférence connectée, au noeud n9. Le circuit 170 de la figure 10 comprend en outre une diode Zener ZD2 ayant son anode reliée, de préférence connectée, au noeud n7, et sa cathode reliée, de préférence connectée, au noeud n9.

L'ensemble comprenant l'enroulement secondaire WS2, les résistances R7 et R8, le condensateur D4, la diode D13 et la diode Zener ZD2 définit une voie de sortie du circuit d'alimentation 170, fournissant, entre les noeuds n7 et n9, la tension d'alimentation de l'un des circuits de commande des transistors K1, K2, K3, K4, K5 et K6 du convertisseur. Cet ensemble peut être répliqué autant de fois que le convertisseur comprend de circuits de commande de transistors à alimenter. La diode Zener ZD2 a pour fonction d'écrêter la tension de sortie du circuit 170 au niveau requis pour la commande des transistors K1, K2, K3, K4, K5 et K6, par exemple à un niveau compris entre -10 et -30 volts. A titre de variante, la diode Zener ZD2 peut être remplacée par tout autre circuit adapté à réguler ou écrêter la tension de sortie du circuit 170. Une voie de sortie supplémentaire peut de plus être prévue pour l'alimentation du commutateur 180 du convertisseur.

Dans l'exemple de la figure 2, le circuit d'alimentation 170 comprend en outre un circuit de démagnétisation de l'inductance de fuite du transformateur T2, comprenant une association en parallèle d'une résistance R9 et d'un condensateur C5 connectée entre le noeud n1 et un noeud n10, et une diode D14 connectée en direct entre le noeud n4 et le noeud n10.

Le fonctionnement du circuit d'alimentation de la figure 2 est un fonctionnement auto-oscillant à deux phases.

Lors d'une première phase, le transistor M1 est fermé, et un courant circule dans l'enroulement primaire WP2 du transformateur T2, qui stocke de l'énergie sous forme magnétique. Lors d'une deuxième phase, le transistor M1 est ouvert, et l'énergie magnétique est transférée au secondaire.

Le réseau R2, ZD1 assure la mise en conduction du transistor M1 à la mise sous tension du circuit. Le courant croît en forme de rampe dans le transistor M1. Il est mesuré par la résistance R3. Le transistor Q1 est rendu passant lorsque la tension aux bornes de la résistance R3 atteint la tension de seuil du transistor Q1, par exemple de l'ordre de 0,6 volts. Ceci conduit à ramener la grille du transistor M1 au potentiel du noeud GND, et donc à bloquer le transistor M1. L'énergie est alors transférée au secondaire via l'enroulement WS2 du transformateur. L'enroulement auxiliaire WS3 permet quant à lui de générer un nouvel ordre de commande pour le transistor M1 via le réseau R6, C3, qui maintien le transistor M1 ouvert pendant une durée liée à la constante de temps du réseau R6, C3. Dans cet exemple, le transistor Q1 n'est commandé que de façon ponctuelle lorsque la tension aux bornes de la résistance R3 atteint la tension de seuil du transistor Q1. La fermeture du transistor Q1 entraine l'ouverture du transistor M1 et donc l'interruption du courant circulant dans la résistance R3.

La compatibilité avec une tension d'entrée alternative ou continue est assurée par le pont de redressement formé par les diodes D9, D10, D11 et D12.

Pour permettre un démarrage rapide du circuit d'alimentation 170, le condensateur de lissage C2 est de préférence un condensateur à faible capacité. A titre d'exemple, le condensateur C2 est choisi de façon que, lors de la phase de démarrage du convertisseur, la valeur minimale de la tension alternative d'entrée redressée fournie par le pont de diodes D9, D10, D11, D12 soit juste au-dessus du seuil de fonctionnement du circuit d'alimentation 170, par exemple comprise entre 10 et 30 volts. A titre d'exemple, la capacité du condensateur C2 est comprise entre 100 et 1000 nF, par exemple de l'ordre de 500 nF. Cette capacité se charge ainsi très rapidement à la mise sous tension, permettant un démarrage rapide du convertisseur.

Le rapport de transformation du transformateur T2 (rapport de la tension de sortie sur la tension d'entrée du transformateur, défini par le rapport du nombre de spires de l'enroulement secondaire WS2 sur le nombre de spires de l'enroulement primaire WP2) est de préférence élevé, par exemple égal à 1, voire supérieur à 1, pour permettre au circuit de délivrer rapidement une tension de sortie apte à bloquer les transistors normalement fermés du convertisseur, même lorsque la tension d'alimentation du circuit 170 est faible. Ce choix implique une fréquence de commutation du transistor M1 élevée, par exemple supérieure ou égale à 1 MHz, pour éviter que le courant dans l'enroulement primaire WP2 ne dépasse une valeur critique (au-delà de laquelle le transformateur et/ou le transistor M1 pourraient être endommagés) lorsque la tension d'alimentation d'entrée du circuit 170 est maximale. Le transformateur T2 présente de préférence des inductances primaire et secondaires de faible valeur pour permettre une oscillation du circuit à une fréquence élevée, par exemple supérieure ou égale à 1 MHz. A titre d'exemple, les inductances primaire et secondaires du transformateur T2 sont inférieures à 10 µH, par exemple de l'ordre de 6 µH.

Les capacités des grilles des transistors K1, K2, K3, K4, K5 et K6 sont de préférence faibles, par exemple inférieure à 1 nF, pour permettre la fourniture du courant nécessaire à la commande des transistors tout en permettant un démarrage très rapide du convertisseur.

Le circuit d'alimentation 170 de la figure 2 fonctionne en boucle ouverte, c'est-à-dire qu'il n'est pas prévu de mesurer la tension de sortie entre les noeuds n7 et n9 du circuit pour commander le transistor M1. Ceci permet un démarrage très rapide du circuit 170. L'élément de limitation de tension constitué, dans l'exemple de la figure 2, par la diode Zener ZD2, permet de réguler la tension de sortie du circuit 170.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, les modes de réalisation décrits ne se limitent pas à l'exemple particulier d'architecture de convertisseur à découpage décrit en relation avec la figure 1. Plus généralement, la solution proposée peut être adaptée à tout convertisseur à découpage comportant au moins un transistor de découpage normalement fermé, et un condensateur de stockage d'énergie relié à des bornes d'application d'un signal d'entrée du convertisseur par l'intermédiaire d'un élément limiteur de courant. Le commutateur 180 est alors configuré pour, lors d'une phase de démarrage du convertisseur, relier les bornes d'alimentation g et h du circuit 170 d'alimentation des circuits de commande du ou des transistors normalement fermés aux bornes d'application du signal d'entrée du convertisseur, en amont de l'élément limiteur de courant. Ceci permet d'assurer le blocage rapide du ou des transistors normalement fermés du convertisseur lors du démarrage. A la fin de la phase de démarrage, le commutateur 180 connecte les bornes d'alimentation g et h du circuit 170 aux bornes du condensateur de stockage. Ceci permet de gérer correctement l'arrêt du convertisseur lorsque le signal d'entrée du convertisseur est interrompu, en utilisant l'énergie du condensateur de stockage pour maintenir ouverts le ou les transistors normalement fermés du convertisseur pendant la phase d'arrêt.

Les modes de réalisation décrits ne se limitent par ailleurs pas à l'exemple de réalisation du circuit d'alimentation 170 décrit en relation avec la figure 2.

En outre, les modes de réalisation décrits ne se limitent pas aux exemples mentionnés ci-dessus de matériaux semiconducteurs pour la réalisation du ou des transistors normalement fermés du convertisseur, à savoir le carbure de silicium ou le nitrure de gallium. Plus généralement, les modes de réalisation décrits peuvent être mis en oeuvre quelle que soit le type de transistor normalement fermé utilisé, par exemple des transistors à base de diamant ou des transistors base d'oxyde de gallium (Ga₂O₃).

On notera de plus que dans l'exemple de convertisseur AC/DC de la figure 1, les diodes D1 et D2 de l'étage 130 peuvent être remplacées par des interrupteurs commandés, par exemple des transistors normalement ouverts, par exemple des transistors MOS à base de silicium.

Enfin, la mise en oeuvre pratique des modes de réalisation et variantes décrits est à la portée de l'homme du métier à partir des indications fonctionnelles données ci-dessus, en particulier pour ce qui est des valeurs à donner aux résistances, aux condensateurs et aux diodes.

## Revendications

1. Convertisseur de puissance comportant :
- des première (E1) et deuxième (E2) bornes d'application d'un signal d'entrée ;
- un condensateur (CBUS) de stockage d'énergie ayant des première et deuxième électrodes reliées respectivement aux première (E1) et deuxième (E2) bornes d'application du signal d'entrée par l'intermédiaire d'un élément limiteur de courant (R1, L1) ;
- au moins un transistor normalement fermé (K1, K2, K3, K4, K5, K6) ;
- un circuit d'alimentation (170) adapté à générer un signal d'alimentation d'un circuit de commande (CMD_K1, CMD_K2) dudit au moins un transistor normalement fermé ; et
- un commutateur (180) configurable pour, dans une première configuration, relier des première (g) et deuxième (h) bornes d'entrée du circuit d'alimentation (170) respectivement aux première (E1) et deuxième (E2) bornes d'application du signal d'entrée, en amont de l'élément limiteur de courant (R1, L1), et, dans une deuxième configuration, connecter les première (g) et deuxième (h) bornes d'entrée du circuit d'alimentation (170) respectivement aux première et deuxième électrodes du condensateur de stockage, en aval de l'élément limiteur de courant (R1, L1),
le convertisseur étant configuré pour, lors d'une phase de démarrage du convertisseur :
- commander le commutateur (180) dans la première configuration ;
- lorsque la tension fournie par le circuit d'alimentation (170) est suffisante, bloquer ledit au moins un transistor normalement fermé (K1, K2, K3, K4, K5, K6) ; puis
- lorsque la tension aux bornes du condensateur de stockage (CBUS) dépasse un premier seuil prédéterminé, commander le commutateur (180) dans la deuxième configuration.

2. Convertisseur selon la revendication 1, configuré pour, lors d'une phase d'arrêt du convertisseur :
- bloquer ledit au moins un transistor normalement fermé (K1, K2, K3, K4, K5, K6) et maintenir le commutateur (180) dans la deuxième configuration ; puis
- lorsque la tension aux bornes du condensateur de stockage (CBUS) passe sous un deuxième seuil prédéterminé, commander le commutateur (180) dans la première configuration.

3. Convertisseur selon la revendication 1 ou 2, dans lequel le signal d'entrée appliqué sur les première (E1) et deuxième (E2) bornes d'entrée du convertisseur est une tension alternative.

4. Convertisseur selon l'une quelconque des revendications 1 à 3, dans lequel l'élément limiteur de courant comprend une inductance (L1) d'entrée et/ou une résistance (R1) de limitation de courant d'appel.

5. Convertisseur selon l'une quelconque des revendications 1 à 4, dans lequel le commutateur (180) comprend un relai électromécanique à deux voies.

6. Convertisseur selon l'une quelconque des revendications 1 à 5, comportant un étage de conversion alternatif/continu (130) comportant un premier pont commandé comportant une première branche comportant des premier (K1) et deuxième (K2) transistors normalement fermés en série entre les première et deuxième électrodes du condensateur de stockage (CBUS) et, en parallèle de la première branche, une deuxième branche comportant des premier (D1) et deuxième (D2) interrupteurs en série entre les première et deuxième électrodes du condensateur de stockage (CBUS), le point milieu (C) entre les premier (K1) et deuxième (K2) transistors normalement fermés de la première branche et le point milieu (D) entre les premier (D1) et deuxième (D2) interrupteurs de la deuxième branche étant reliés respectivement aux première (E1) et deuxième (E2) bornes d'application de la tension d'entrée du convertisseur par l'intermédiaire de l'élément limiteur de courant (R1, L1).

7. Convertisseur selon la revendication 6, comprenant en outre un étage de conversion continu/continu (150) comportant un deuxième pont commandé comportant une première branche comportant des troisième (K3) et quatrième (K4) transistors normalement fermés en série entre les première et deuxième électrodes du condensateur de stockage (CBUS) et, en parallèle de la première branche, une deuxième branche comportant des cinquième (K5) et sixième (K6) transistors normalement fermés en série entre les première et deuxième électrodes du condensateur de stockage (CBUS).

8. Convertisseur selon la revendication 7, dans lequel l'étage de conversion continu/continu (150) comprend en outre un transformateur (T1) comprenant un enroulement primaire (WP1) comprenant des première et deuxième extrémités reliées respectivement au point milieu entre les troisième (K3) et quatrième (K4) transistors normalement fermés de la première branche du deuxième pont et au point milieu entre les cinquième (K5) et sixième (K6) transistors normalement fermés de la deuxième branche du deuxième pont, par l'intermédiaire d'un circuit résonant (L2, L3, C1).

9. Convertisseur selon la revendication 8, dans lequel le transformateur (T1) de l'étage de conversion continu/continu (150) comprend en outre un enroulement secondaire (WS1) comportant des première et deuxième extrémités reliées respectivement à des première (S1) et deuxième (S2) bornes de sortie du convertisseur par l'intermédiaire d'un pont de redressement à diodes (D5, D6, D7, D8).

10. Convertisseur selon l'une quelconque des revendications 1 à 9, dans lequel le circuit d'alimentation (170) est un circuit auto-oscillant comprenant un transformateur (T2) comportant un enroulement primaire (WP2) relié en série avec un transistor de découpage (M1), au moins un premier enroulement secondaire (WS2) fournissant le signal d'alimentation du circuit de commande (CMD_K1, CMD_K2) dudit au moins un transistor normalement fermé, et un deuxième enroulement secondaire (WS3) fournissant un signal de commande du transistor de découpage (M1).

11. Convertisseur selon la revendication 10, dans lequel le circuit d'alimentation (170) comprend en outre un pont de redressement à diodes (D9, D10, D11, D12) comportant des premier et deuxième noeuds d'entrée reliés respectivement aux première (g) et deuxième (h) bornes d'entrée du circuit d'alimentation, et des premier (n1) et deuxième (n2) noeuds de sortie reliés respectivement à des première et deuxième extrémités de l'association en série de l'enroulement primaire (WP2) du transformateur (T2) du circuit d'alimentation (170) et du transistor de découpage (M2).

12. Convertisseur selon la revendication 10 ou 11, dans lequel le circuit d'alimentation (170) comprend en outre un condensateur de lissage (C2) en parallèle de l'association en série de l'enroulement primaire (WP2) du transformateur (T2) du circuit d'alimentation (170) et du transistor de découpage (M2).

## Patentansprüche

1. Ein Leistungswandler, der Folgendes aufweist:
einen ersten (E1) und einen zweiten (E2) Anschluss zum Anlegen eines Eingangssignals;
einen Leistungsspeicherkondensator (CBUS) mit einer ersten und einer zweiten Elektrode, die über ein Strombegrenzungselement (R1, L1) mit dem ersten (E1) bzw. dem zweiten (E2) Anschluss zum Anlegen des Eingangssignals verbunden sind;
mindestens einen normalerweise eingeschalteten Transistor (K1, K2, K3, K4, K5, K6);
eine Stromversorgungsschaltung (170), die in der Lage ist, ein Signal zum Versorgen einer Schaltung (CMD_K1, CMD_K2) zum Steuern des mindestens einen normalerweise eingeschalteten Transistors zu erzeugen; und
einen Schalter (180), der so konfigurierbar ist, dass er in einer ersten Konfiguration den ersten (g) und den zweiten (h) Eingangsanschluss der Stromversorgungsschaltung (170) mit dem ersten (E1) bzw. dem zweiten (E2) Anschluss zum Anlegen des Eingangssignals vor dem Strombegrenzungselement (R1, L1) verbindet, und in einer zweiten Konfiguration den ersten (g) und den zweiten (h) Eingangsanschluss der Stromversorgungsschaltung (170) mit der ersten bzw. der zweiten Elektrode des Speicherkondensators nach dem Strombegrenzungselement (R1, L1) verbindet;
wobei der Leistungswandler so konfiguriert ist, dass er während einer Startphase des Leistungswandlers
den Schalter (180) in die erste Konfiguration schaltet;
den mindestens einen normalerweise eingeschalteten Transistor (K1, K2, K3, K4, K5, K6) sperrt, wenn die von der Stromversorgungsschaltung (170) gelieferte Spannung ausreichend ist; und dann
den Schalter (180) in die zweite Konfiguration schaltet, wenn die Spannung an dem Speicherkondensator (CBUS) einen ersten vorbestimmten Schwellenwert überschreitet.

2. Leistungswandler nach Anspruch 1, der so konfiguriert ist, dass er während einer Stoppphase des Leistungswandlers
den mindestens einen normalerweise eingeschalteten Transistor (K1, K2, K3, K4, K5, K6) sperrt und den Schalter (180) in der zweiten Konfiguration hält; und dann
den Schalter (180) in die erste Konfiguration schaltet, wenn die Spannung an dem Speicherkondensator (CBUS) unter einen zweiten vorbestimmten Schwellenwert fällt.

3. Leistungswandler nach Anspruch 1 oder 2, wobei das an den ersten (E1) und zweiten (E2) Eingangsanschluss des Leistungswandlers angelegte Eingangssignal eine Wechselspannung ist.

4. Leistungswandler nach einem der Ansprüche 1 bis 3, wobei das Strombegrenzungselement eine Eingangsinduktivität (L1) und/oder einen Einschaltstrombegrenzungswiderstand (R1) aufweist.

5. Leistungswandler nach einem der Ansprüche 1 bis 4, wobei der Schalter (180) ein elektromechanisches Umschaltrelais aufweist.

6. Leistungswandler nach einem der Ansprüche 1 bis 5, der ferner eine Wechselstrom/Gleichstrom-Wandlerstufe (130) aufweist, welche eine erste gesteuerte Brücke aufweist, die einen ersten Zweig mit einem ersten (K1) und einem zweiten (K2) normalerweise eingeschalteten Transistor in Reihe zwischen der ersten und der zweiten Elektrode des Speicherkondensators (CBUS) aufweist und parallel zu dem ersten Zweig einen zweiten Zweig mit einem ersten (D1) und einem zweiten (D2) Unterbrecher in Reihe zwischen der ersten und der zweiten Elektrode des Speicherkondensators (CBUS) aufweist, wobei der Verbindungspunkt (C) des ersten (K1) und des zweiten (K2) normalerweise eingeschalteten Transistors des ersten Zweigs und der Verbindungspunkt (D) des ersten (D1) und des zweiten (D2) Unterbrechers des zweiten Zweigs jeweils mit dem ersten (E1) und dem zweiten (E2) Anschluss zum Anlegen der Eingangsspannung des Leistungswandlers über das Strombegrenzungselement (R1, L1) verbunden sind.

7. Leistungswandler nach Anspruch 6, der ferner eine Gleichstrom/Gleichstrom-Wandlerstufe (150) aufweist, welche eine zweite gesteuerte Brücke aufweist, die einen ersten Zweig mit einem dritten (K3) und einem vierten (K4) normalerweise eingeschalteten Transistor in Reihe zwischen der ersten und der zweiten Elektrode des Speicherkondensators (CBUS) aufweist und parallel zu dem ersten Zweig einen zweiten Zweig mit einem fünften (K5) und einem sechsten (K6) normalerweise eingeschalteten Transistor in Reihe zwischen der ersten und der zweiten Elektrode des Speicherkondensators (CBUS) aufweist.

8. Leistungswandler nach Anspruch 7, wobei die Gleichstrom/Gleichstrom-Wandlerstufe (150) ferner einen Transformator (T1) aufweist, der eine Primärwicklung (WP1) mit einem ersten und einem zweiten Ende aufweist, die über einen Resonanzkreis (L2, L3, C1) mit dem Verbindungspunkt des dritten (K3) und des vierten (K4) normalerweise eingeschalteten Transistors des ersten Zweigs der zweiten Brücke bzw. mit dem Verbindungspunkt des fünften (K5) und des sechsten (K6) normalerweise eingeschalteten Transistors des zweiten Zweigs der zweiten Brücke verbunden sind.

9. Leistungswandler nach Anspruch 8, wobei der Transformator (T1) der Gleichstrom/Gleichstrom-Wandlerstufe (150) ferner eine Sekundärwicklung (WS1) aufweist, die ein erstes und ein zweites Ende aufweist, die über eine Gleichrichterdiodenbrücke (D5, D6, D7, D8) mit dem ersten (S1) bzw. dem zweiten (S2) Ausgangsanschluss des Leistungswandlers verbunden sind.

10. Leistungswandler nach einem der Ansprüche 1 bis 9, wobei die Stromversorgungsschaltung (170) eine selbstschwingende Schaltung ist, die einen Transformator (T2) aufweist, welcher eine Primärwicklung (WP2), die mit einem Schalttransistor (M1) in Reihe geschaltet ist, mindestens eine erste Sekundärwicklung (WS2), die das Signal zur Versorgung der Steuerschaltung (CMD_K1, CMD_K2) des mindestens einen normalerweise eingeschalteten Transistors liefert, und eine zweite Sekundärwicklung (WS3), die ein Signal zur Steuerung des Schalttransistors (M1) liefert, umfasst.

11. Leistungswandler nach Anspruch 10, wobei die Stromversorgungsschaltung (170) ferner eine Gleichrichterdiodenbrücke (D9, D10, D11, D12) aufweist, die einen ersten und einen zweiten Eingangsknoten aufweist, die mit dem ersten (g) bzw. dem zweiten (h) Eingangsanschluss der Stromversorgungsschaltung verbunden sind, sowie einen ersten (n1) und einen zweiten (n2) Ausgangsknoten aufweist, die mit dem ersten bzw. dem zweiten Ende der Reihenschaltung der Primärwicklung (WP2) des Transformators (T2) der Stromversorgungsschaltung (170) und des Schalttransistors (M2) verbunden sind.

12. Leistungswandler nach Anspruch 10 oder 11, wobei die Stromversorgungsschaltung (170) ferner einen Glättungskondensator (C2) parallel zu der Reihenschaltung der Primärwicklung (WP2) des Transformators (T2) der Stromversorgungsschaltung (170) und des Schalttransistors (M2) aufweist.

## Claims

1. A power converter comprising:
- first (E1) and second (E2) terminals of application of an input signal;
- a power storage capacitor (CBUS) having first and second electrodes respectively coupled to the first (E1) and second (E2) terminals of application of the input signal via a current-limiting element (R1, L1);
- at least one normally-on transistor (K1, K2, K3, K4, K5, K6) ;
- a power supply circuit (170) capable of generating a signal for powering a circuit (CMD_K1, CMD_K2) for controlling said at least one normally-on transistor; and- a switch (180) configurable to, in a first configuration, couple first (g) and second (h) input terminals of the power supply circuit (170) respectively to the first (E1) and second (E2) terminals of application of the input signal, upstream of the current-limiting element (R1, L1) and, in a second configuration, connect the first (g) and second (h) input terminals of the power supply circuit (170) respectively to the first and second electrodes of the storage capacitor, downstream of the current-limiting element (R1, L1),
the power converter being configured to, during a converter starting phase:
- control the switch (180) to the first configuration; - when the voltage supplied by the power supply circuit (170) is sufficient, block said at least one normally-on transistor (K1, K2, K3, K4, K5, K6); and then
- when the voltage across the storage capacitor (CBUS) exceeds a first predetermined threshold, control the switch (180) to the second configuration.

2. The converter of claim 1, configured to, during a converter stop phase:
- block said at least one normally-on transistor (K1, K2, K3, K4, K5, K6) and hold the switch (180) in the second configuration; and then
- when the voltage across the storage capacitor (CBUS) falls under a second predetermined threshold, control the switch (180) to the first configuration.

3. The converter claim 1 or 2, wherein the input signal applied to the first (E1) and second (E2) input terminals of the converter is an AC voltage.

4. The converter of any of claims 1 to 3, wherein the current-limiting element comprises an input inductance (L1) and/or an inrush current limiting resistor (R1).

5. The converter of any of claims 1 to 4, wherein the switch (180) comprises a double-throw electromechanical relay.

6. The converter of any of claims 1 to 5, comprising an AC/DC conversion stage (130) comprising a first controlled bridge comprising a first branch comprising first (K1) and second (K2) normally-on transistors in series between the first and second electrodes of the storage capacitor (CBUS) and, in parallel with the first branch, a second branch comprising first (D1) and second (D2) switches in series between the first and second electrodes of the storage capacitor (CBUS), the junction point (C) of the first (K1) and second (K2) normally-on transistors of the first branch and the junction point (D) of the first (D1) and second (D2) switches of the second branch being respectively coupled to the first (E1) and second (E2) terminals of application of the input voltage of the converter via the current limiting-element (R1, L1).

7. The converter of claim 6, further comprising a DC/DC conversion stage (150) comprising a second controlled bridge comprising a first branch comprising third (K3) and fourth (K4) normally-on transistors in series between the first and second electrodes of the storage capacitor (CBUS) and, in parallel with the first branch, a second branch comprising fifth (K5) and sixth (K6) normally-on transistors in series between the first and second electrodes of the storage capacitor (CBUS).

8. The converter of claim 7, wherein the DC/DC conversion stage (150) further comprises a transformer (T1) comprising a primary winding (WP1) comprising first and second ends respectively coupled to the junction point of the third (K3) and fourth (K4) normally-on transistors of the first branch of the second bridge and to the junction point of the fifth (K5) and sixth (K6) normally-on transistors of the second branch of the second bridge, via a resonant circuit (L2, L3, C1).

9. The converter of claim 8, wherein the transformer (T1) of the DC/DC conversion stage (150) further comprises a secondary winding (WS1) comprising first and second ends respectively coupled to first (S1) and second (S2) output terminals of the converter via a rectifying diode bridge (D5, D6, D7, D8).

10. The converter of any of claims 1 to 9, wherein the power supply circuit (170) is a self-oscillating circuit comprising a transformer (T2) comprising a primary winding (WP2) series-coupled with a switching transistor (M1), at least one first secondary winding (WS2) supplying the signal for powering the control circuit (CMD_K1, CMD_K2) of said at least one normally-on transistor, and a second secondary winding (WS3) supplying a signal for controlling the switching transistor (M1).

11. The converter of claim 10, wherein the power supply circuit (170) further comprises a rectifying diode bridge (D9, D10, D11, D12) comprising first and second input nodes respectively coupled to the first (g) and second (h) input terminals of the power supply circuit, and first (n1) and second (n2) output nodes respectively coupled to first and second ends of the series association of the primary winding (WP2) of the transformer (T2) of the power supply circuit (170) and of the switching transistor (M2).

12. The converter of claim 10 or 11, wherein the power supply circuit (170) further comprises a smoothing capacitor (C2) in parallel with the series association of the primary winding (WP2) of the transformer (T2) of the power supply circuit (170) and of the switching transistor (M2) .
